Europäisches Patentamt

European Patent Office

Office européen des brevets

(11) Veröffentlichungsnummer: **0 224 742**
**A2**

(12) # EUROPÄISCHE PATENTANMELDUNG

(21) Anmeldenummer: 86115316.1

(22) Anmeldetag: 05.11.86

(51) Int. Cl.⁴: **A61C 5/06**

(30) Priorität: 02.12.85 DE 8533848 U

(43) Veröffentlichungstag der Anmeldung:
**10.06.87 Patentblatt 87/24**

(84) Benannte Vertragsstaaten:
**AT BE CH DE FR GB IT LI NL SE**

(71) Anmelder: **Degussa Aktiengesellschaft**
**Weissfrauenstrasse 9**
**D-6000 Frankfurt am Main 1(DE)**

(72) Erfinder: **Diehl, Walter, Dr.**
**Gustav-Adolf-Strasse 29**
**D-6450 Hanau 1(DE)**
Erfinder: **Ringelstein, Hans-Martin**
**Inheidenerstrasse 22**
**D-6000 Frankfurt 60(DE)**

(54) Verpackungseinheit für plastisches Zahnfüllungsmaterial.

(57) Eine Verpackungseinheit für plastisches Zahnfüllungsmaterial, das mit Hilfe eines Stopfwerkzeugs in Kavitäten eingebracht wird, besteht aus einem beiderseits offenen Kunststoffröhrchen, das teilweise mit dem Zahnfüllungsmaterial ausgefüllt ist. Der Innendurchmesser des Kunststoffröhrchens muß dabei dem Außendurchmesser des Stopfwerkzeugs entsprechen.

EP 0 224 742 A2

## Verpackungseinheit für plastisches Zahnfüllungsmaterial

Die Erfindung betrifft eine Verpackungseinheit für plastisches Zahnfüllungsmaterial, das mit Hilfe eines Stopfwerkzeugs in Kavitäten eingebracht wird.

In der konservierenden Zahnheilkunde verwendet man neuerdings zur Füllung von Kavitäten wieder verstärkt plastisches Zahnfüllungsmaterial in Form von Stopfgold oder ähnlichen Massen. Sie bestehen meist aus Goldpulver, sonstigen mundbeständigen Metallpulvern oder Kunststoffpulvern und einem plastischen Bindemittel. Solche Zahnfüllungsmaterialien sind beispielsweise in den DE-PSen 34 03 779 und 34 03 777 beschrieben. Entsprechende Pasten werden mit einem Werkzeug in die Kavität eingebracht, wo sie unter Druck-und Ultraschalleinwirkung der Kavität angepasst und verfestigt werden.

Es war Aufgabe der vorliegenden Erfindung eine Verpackungseinheit für plastisches Zahnfüllungsmaterial zu entwickeln, mit der dieses auf einfache Weise mit Hilfe des Stopfwerkzeugs in die Kavität eingebracht werden kann.

Diese Aufgabe wird erfindungsgemäß dadurch gelöst, daß sie aus einem beiderseits offenen Kunststoffröhrchen besteht, das teilweise mit dem Zahnfüllungsmaterial ausgefüllt ist, wobei der Innendurchmesser des Kunststoffröhrchens dem Außendurchmesser des Stopfwerkzeugs angepasst ist.

Vorzugsweise sind die Kunststoffröhrchen an einem Ende mit Schlitzen versehen.

Bei der Verarbeitung des Zahnfüllungsmaterials wird das teilweise gefüllte Kunststoffröhrchen auf das Stopfwerkzeug aufgesteckt, beispielsweise auf die Sonotrodenspitze eines Ultraschallwerkzeugs, und dieses an die Kavität gebracht.

Das Stopfen und Verdichten des Zahnfüllungsmaterials in der Kavität vollzieht sich unter langsamen Durchschieben des Stopfwerkzeugs durch das Kunststoffröhrchen. Ist das Röhrchen geleert, wird es abgestreift und gegebenenfalls durch ein neues Röhrchen ersetzt.

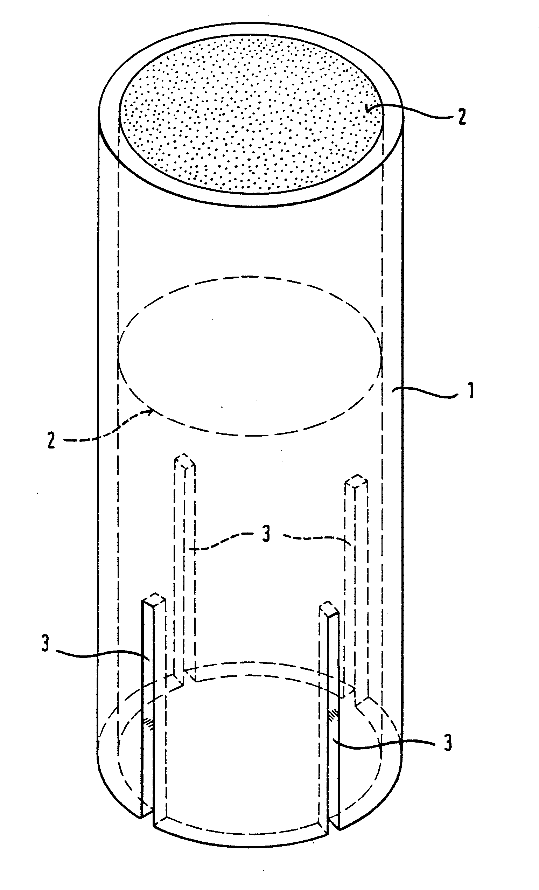

Die Abbildung zeigt schematisch in beispielhafter Ausführungsform eine solche Verpackungseinheit. In einem Kunststoffröhrchen (I) befindet sich an einem Ende das plastische Zahnfüllungsmaterial (2), während das andere Ende mit Schlitzen (3) versehen ist. Das Stopfwerkzeug wird vorzugsweise von dem ungeschlitzten Ende aus in das Kunststoffröhrchen (I) eingeführt.

### Ansprüche

I. Verpackungseinheit für plastisches Zahnfüllungsmaterial, das mit Hilfe eines Stopfwerkzeugs in Kavitäten eingebracht wird, dadurch gekennzeichnet, daß sie aus einem beiderseits offenen Kunststoffröhrchen (I) besteht, das teilweise mit dem Zahnfüllungsmaterial (2) ausgefüllt ist, wobei der Innendurchmesser des Kunststoffröhrchens (I) dem Außendurchmesser des Stopfwerkzeugs angepasst ist.

2. Verpackungseinheit nach Anspruch I, dadurch gekennzeichnet, daß das Kunststoffröhrchen (I) an einem Ende mit Schlitzen (3) versehen ist.